# EUROPÄISCHE PATENTSCHRIFT

(11) **EP 0 387 509 B1**
(45) Veröffentlichungstag und Bekanntmachung des Hinweises auf die Patenterteilung: **06.07.1994**
(21) Anmeldenummer: 90101647.7
(22) Anmeldetag: 27.01.1990
(51) Int. Cl.: B29C 51/16

(54) **Vorrichtung zum Zuführen eines Etiketts in ein Formnest einer Formvorrichtung zum Tiefziehen von Kunststoffbehältnissen**
Apparatus for feeding a label to the cavity of a moulding device for the deep-drawing of plastics containers
Dispositif pour l'introduction d'une étiquette dans la cavité d'un moule pour l'emboutissage de récipients en matière plastique

(30) Priorität: 17.03.1989 DE 3908774
(43) Veröffentlichungstag der Anmeldung: 19.09.1990
(73) Patentinhaber: GEA Finnah GmbH, D-48683 Ahaus (DE)
(72) Erfinder: Finnah, Josef, D-4422 Ahaus (DE)
(74) Vertreter: Busse & Busse Patentanwälte

(56) Entgegenhaltungen:
- DE-U- 7 327 513
- FR-A- 2 454 970
- FR-A- 2 606 701
- FR-A- 2 606 702

## Beschreibung

Die Erfindung betrifft eine Vorrichtung zum Zuführen eines Etiketts in ein Formnest einer ein auf- und abbewegbares Unterwerkzeug umfassenden Formvorrichtung für Kunststoffbehältnisse nach dem Oberbegriff des Patentanspruchs 1.

Es ist bereits eine Vorrichtung dieser Art bekannt (FR-A-2 454 970), bei der die Formvorrichtung zur Herstellung der Kunststoffbehältnisse aus einer Spritzgußform besteht, die einen Formkörper aus zwei in senkrechter Richtung voneinander trennbaren Formteilen aufweist, die für die Durchführung eines Formvorgangs gemeinsam das Formnest bzw. zwei nebeneinanderliegende Formnester bilden. Für die Anbringung eines Etiketts an einer Seitenwand eines Formnestes wird ein mittlerer Formteil als Unterwerkzeug in eine untere Stellung bewegt, in der diesem eine der Seitenwände des Formnestes umfassenden Formteil mittels des Umsetzers das jeweilige Etikett zugeführt wird. Der Umsetzer ist bei dieser bekannten Vorrichtung von einem Auswerferstößel für das erfaßte Etikett gebildet, der eine geradlinige, horizontale Verschiebebewegung zur Übergabe des Etiketts an die Seitenwand des Formnestteils im Unterwerkzeug ausführt und auf einem Träger abgestützt ist, der seinerseits zur Ausführung einer zur Bewegungsbahn des Auswerferstößels parallelen, geradlinigen, horizontalen Bewegung in der Vorrichtung beweglich abgestützt ist. Nach dem Anbringen des Etiketts wird das Unterwerkzeug senkrecht zur Bewegungsrichtung des Auswerferstößels und dessen Trägers nach oben verfahren, um mit seiner Formnestseitenwand das Formnest des oberen Formteils zu vervollständigen. Die bekannte Vorrichtung ist in ihrem Aufbau kompliziert und störanfällig, wozu auch die mehrfachen Bewegungsabläufe einschl. des Hochfahrens des mit dem Etikett versehenen Unterwerkzeugs in den oberen Formteil zur Vervollständigung des jeweiligen Formnestes beiträgt. Zudem wird dabei der Vorgang des Einbringens des jeweiligen Etiketts in das Formnest stark verzögert, und es können Ungenauigkeiten in der Plazierung des Etiketts an der Seitenwand des Formnestes auftreten.

Der Erfindung liegt die Aufgabe zugrunde, eine Vorrichtung zum Zuführen von Etiketten zu einer Formvorrichtung zum Tiefziehen von Kunststoffbehältnissen zu schaffen, die einfach in ihrem Aufbau ist und ein schnelles und präzises Einbringen des jeweiligen Etiketts in das zugehörige Formnest ermöglicht.

Diese Aufgabe wird nach der Erfindung durch eine Ausgestaltung der Vorrichtung entsprechend dem Patentanspruch 1 gelöst. Bei dieser Ausgestaltung wird unmittelbar nach dem Abschneiden des einzelnen Etiketts vom vorderen Ende der Etikettenbahn das vereinzelte Etikett vom Umsetzer selbst ohne Zwischenschaltung weiterer Transportmittel unmittelbar in einem durchgehenden Bewegungsablauf über die obere Randkante des zugehörigen Formnestes an dessen vorgesehener Seitenwand zur Anlage gebracht, um bei dem anschließenden Tiefziehvorgang der Kunststoffolie mit der Außenwand des tiefgezogenen Behältnisses versiegelt bzw. verklebt zu werden. Der Umsetzer führt dabei nur eine einfache, unkomplizierte Bewegung zwischen einer Annahmestellung für das jeweils zu vereinzelnde Etikett und einer Abgabestellung für das vereinzelte, in das Formnest einzubringende Etikett aus, wie sie dank der Ausbildung des Umsetzers als um eine zur Randkante des Formnest parallele, horizontale Achse klappbarer Schwenkträger auf denkbar einfache Weise herbeigeführt werden kann. Auf diese Weise kann das jeweilige Etikett schnell und präzise in das zugehörige Formnest eingeführt werden, das bei der erfindungsgemäßen Ausgestaltung als Ganzes im Unterwerkzeug gebildet ist. Die Formvorrichtung selbst ist dabei von Verkomplizierungen durch die Etiketteneinführung freigehalten und besitzt damit ein hohes Maß an Störungsunanfälligkeit und Wartungsfreundlichkeit aufgrund leichter Zugänglichkeit zu den Einzelteilen.

Weitere Merkmale und Vorteile der Erfindung ergeben sich aus den Unteransprüchen und der nachstehenden Beschreibung in Verbindung mit der Zeichnung, in der ein Ausführungsbeispiel des Gegenstands der Erfindung schematisch veranschaulicht ist. In der Zeichnung zeigen:
- Fig. 1: eine Draufsicht auf das Unterwerkzeug einer Formvorrichtung zum Tiefziehen von Kunststoffbehältnissen aus Kunststoffolie mit einer zweireihigen Anordnung von Formnestern und mit beidseitigen Transportmitteln zur Zuführung von Etiketten zu der angrenzenden Formnestreihe,
- Fig. 2: einen Schnitt nach der Linie A-A der Fig. 1 in gegenüber dieser größerem Maßstab und
- Fig. 3: eine Schnittdarstellung entsprechend Fig. 2, jedoch mit einer anderen Betriebsstellung der Etikettentransportmittel.

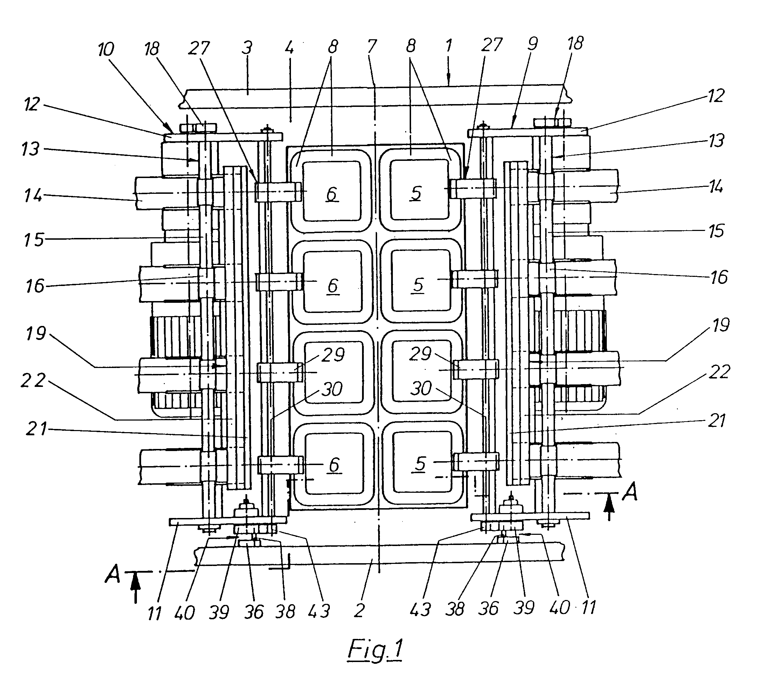

In Fig. 1 der Zeichnung ist eine Formvorrichtung zum Tiefziehen von Kunststoffbehältnissen mit bei dem dargestellten Beispiel rechteckiger bzw. quadratischer Querschnittsgrundform aus Kunststoffolie mit ihrem auf- und abbewegbaren Unterwerkzeug 1 dargestellt. Das Unterwerkzeug 1 umfaßt eine vordere Traverse 2 und eine hintere Traverse 3 sowie ein sich zwischen diesen erstreckendes horizontales Formenbett 4, in dem zwei parallele Reihen von Formnestern 5 und 6 in symmetrischer Anordnung beidseits der vertikalen Längsmittelebene 7 des Unterwerkzeugs 1 ausgebildet sind. Die Formnester 5 und 6 sind jeweils von vier rechtwinklig aneinandergrenzenden Seitenwänden 8 begrenzt.

Entsprechend dem dargestellten Beispiel einer zweireihigen Formnestanordnung beidseits der vertikalen Längsmittelebene 7 des Unterwerkzeugs 1 sind zwei Vorrichtungen zum Zuführen je eines Etiketts in die Formnester 5 und 6 vorgesehen, die ihrerseits in symmetrischer Anordnung beidseits der vertikalen Längsmittelebene 7 von je einem Wagen 9 bzw. 10 getragen sind. Die Wagen 9 und 10 besitzen eine identische Ausbildung und sind in Fig. 1 jeweils mit einer an die Traverse 2 des Unterwerkzeugs 1 angrenzenden Seitenwand 11 und einer an die Traverse 3 des Unterwerkzeugs 1 angrenzenden Seitenwand 12 dargestellt. Die Wagen 9 und 10 sind quer zur Längsmittelebene 7 des Unterwerkzeugs 1 und damit quer zur Abziehrichtung der Tiefzieh-Kunststoffolie beweglich und werden in einer entsprechend den Abmessungen der zuzuführenden Etiketten im Zusammenspiel mit den Abmessungen der Formnester 5, 6 eingestellten Arbeitsposition ihrer Etikettenzuführvorrichtung gegenüber der angrenzenden Reihe von Formnestern 5 bzw. 6 gegenüber diesen festgesetzt.

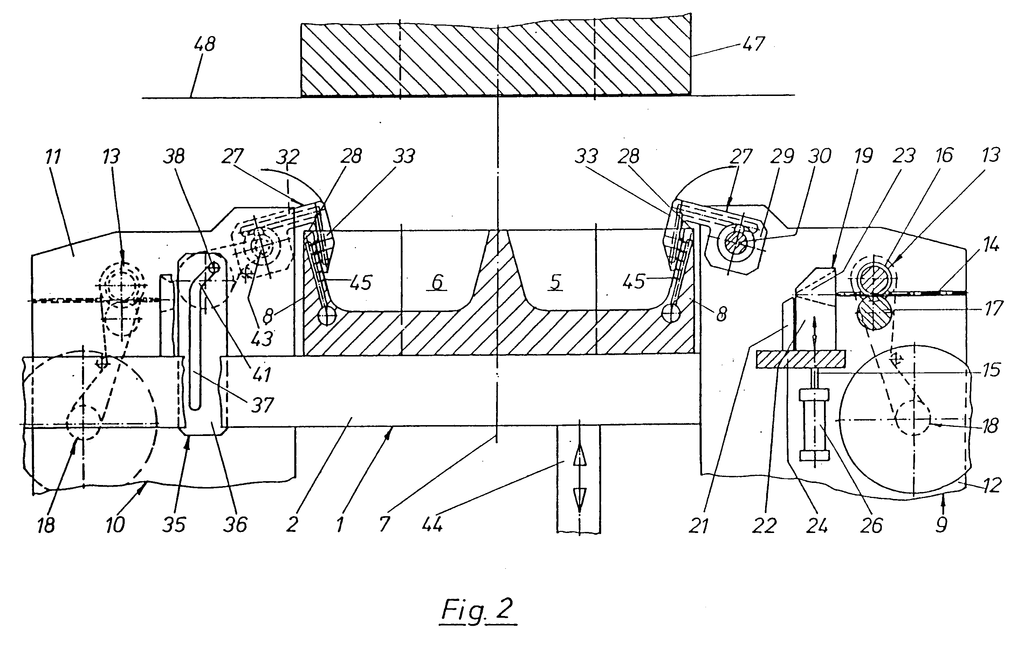

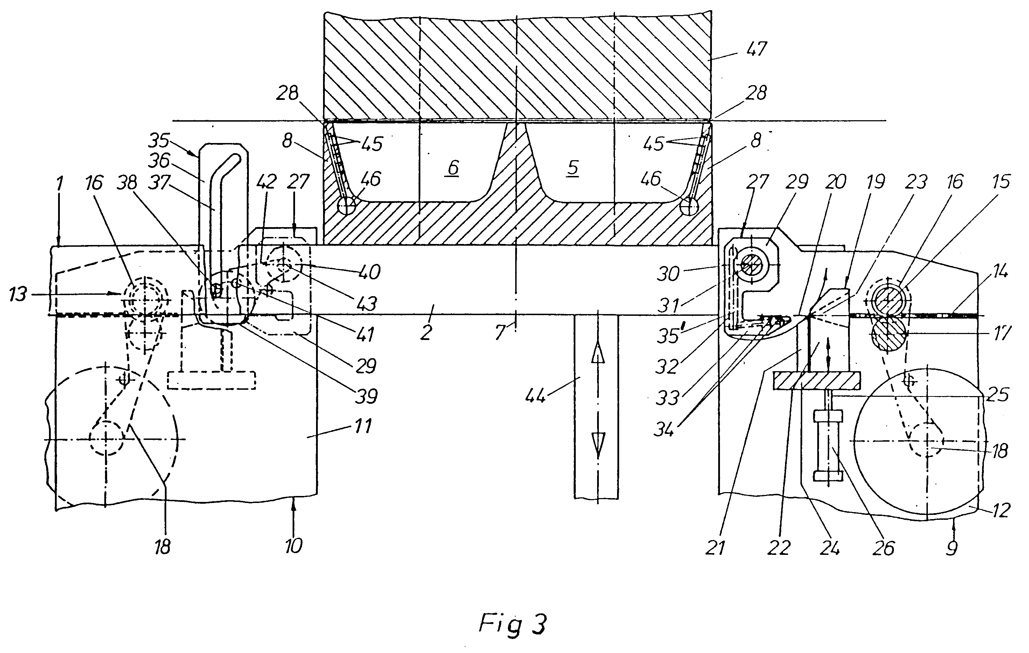

In den Seitenwänden 11 und 12 jedes Wagens 9, 10 ist als Fördervorrichtung 13 zum intermittierenden Vorziehen je einer aufeinanderfolgende Etiketten umfassenden Etikettenbahn 14 zu jedem Formnest 5 bzw. 6 der beiden Formnestreihen hin eine Vorzugwelle 15 drehbar abgestützt, auf der vier Druckrollen 16 für einen Klemmeingriff mit der jeweiligen Etikettenbahn 14 festgelegt sind. Die Druckrollen 16 arbeiten mit einer ihrerseits in den Seitenwänden 11 und 12 drehbar abgestützten Welle 17 (Fig. 2 und 3) als Gegendruckorgan zusammen. Die Vorzugwelle 15 wird in nicht näher dargestellter Weise von einem an der Seitenwand 12 des Wagens 9, 10 außen an der Welle angreifenden Kettentrieb 18 oder dgl. Antriebsmittel intermittierend angetrieben, um die Etikettenbahnen 14 jeweils um ein der Länge eines Einzeletiketts entsprechendes Wegstück durch den Spalt zwischen den Druckrollen 16 und der frei drehbaren Gegendruckwelle 17 in Richtung auf eine Schneidvorrichtung 19 bei ihrem Umlauf durch Klemmwirkung vorzubewegen.

In der Schneidvorrichtung 19 jedes Wagens 9, 10 wird jeweils ein einzelnes Etikett 20 (Fig. 3) vom vorderen Ende der jeweiligen Etikettenbahn 14 abgeschnitten. Die Schneidvorrichtung 19 umfaßt hierzu jeweils ein festes Schneidmesser 21 und ein mittels eines Antriebs gegenüber diesem für einen Schneidvorgang bewegliches Führungsorgan 22, das als Gegenmesser wirkt. Das Schneidmesser 21 und das Führungsorgan 22 sind durchgehend für sämtliche Etikettenbahnen 14 im jeweiligen Wagen 9 bzw. 10 abgestützt. Dabei ist das Führungsorgan 22, wie sich insbesondere aus den Fig. 2 und 3 ergibt, in der Förderebene der in geeigneten Seitenführungen geführten jeweiligen Etikettenbahn 14 als Schlitzkörper mit einem Einlauftrichter 23 ausgebildet, der an dem dem Messer 21 zugewandten Ende des Führungsorgans 22 in einem Austrittsschlitz für das vordere Ende der Etikettenbahn 14 ausmündet. Unterseitig ist das Führungsorgan 22 auf einer Tragplatte 24 abgestützt, an deren Unterseite die Kolbenstange 25 eines durch ein geeignetes Druckmittel, vorzugsweise Druckluft, betätigten Arbeitszylinders 26 des jeweiligen Wagens 9 bzw. 10 befestigt ist.

Sobald von der intermittierend arbeitenden Fördervorrichtung 13 die jeweiligen Etikettenbahnen 14 in einem Förderschritt um das die jeweilige Etikettenlänge bestimmende Wegstück, beispielsweise unter der Kontrolle einer geeigneten Fotozellensteuerung, vorbewegt worden sind, wird die Schneidvorrichtung 19 zum Abtrennen des vorderen Endes der Etikettenbahn 14 betätigt, das unterdessen von einem Umsetzer 27 der auf dem jeweiligen Wagen 9 bzw. 10 abgestützten Etikettenzuführvorrichtung erfaßt worden ist. Erst nachdem das vordere Ende der Etikettenbahnen 14 in dieser Weise festgelegt ist, erfolgt das Abtrennen des Etiketts 20 durch eine Abwärtsbewegung des Führungsorgans 22 durch Einfahren der Kolbenstange 25 des Arbeitszylinders 26, wobei der Austrittsschlitzbereich des Führungsorgans 22 als Gegenmesser zu dem feststehenden Schneidmesser 21 bei der Durchführung des Trennvorgangs wirkt.

Der Umsetzer 27 jedes Wagens 9, 10 bildet ein Transportmittel, mit dessen Hilfe das vom vorderen Ende der jeweiligen Etikettenbahn 14 abgeschnittene Etikett 20 über die obere Randkante 28 des jeweiligen Formnestes 5 bzw. 6 in Anlage an die Innenfläche der angrenzenden Seitenwand 8 des jeweiligen Formnestes 5 bzw. 6 gebracht wird.

Entsprechend der bei dem dargestellten Beispiel gewählten zweireihigen Formnestanordnung mit jeweils vier Formnestern 5 bzw. 6 in jeder Reihe sind bei der Etikettenzuführvorrichtung jedes Wagens 9 bzw. 10 vier Umsetzer 27 in Form je eines Schwenkträgers 29 vorgesehen, die auf einer gemeinsamen Schwenkwelle 30 in mit der jeweiligen Schneidvorrichtung 19 fluchtender Ausrichtung festgelegt sind. Die Schwenkwelle 30 ist in den beiden Seitenwänden 11 und 12 des Wagens 9 bzw. 10 drehbar gelagert und definiert eine zur Randkante 28 der Formnester 5, 6 parallele, horizontale Achse 31, um die die Schwenkträger 29 zwischen ihrer in Fig. 3 gezeigten Annahmestellung und ihrer aus Fig. 2 ersichtlichen Abgabestellung in und entgegen dem Uhrzeigersinn verschwenkbar sind.

Die Schwenkträger 29 sind L-förmig ausgebildet, wobei ein Schenkel 32 die Verbindung zum Wellenbefestigungsteil des Schwenkträgers bildet, während der freie Schenkel 33 in der aus Fig. 3 ersichtlichen Annahmestellung des Schwenkträgers 29 auf seiner Oberseite eine horizontale Annahmefläche für das jeweilige Etikett 20 bzw. das vordere Ende der Etikettenbahn 14 bildet, die der Schneidvorrichtung 19 in dieser Stellung unmittelbar nachgeordnet ist und in einer mit der Schneidebene der Etikettenbahn 14 gemeinsamen horizontalen Ebene liegt. Dabei sind der vom Schenkel 33 dargebotenen Annahmefläche Mittel zur Etikettenfixierung zugeordnet, die bei dem dargestellten Beispiel in der Annahmefläche ausmündende Saugluftöffnungen 34 umfassen, die über eine Kanalverbindung 35' in den Schenkeln 32 und 33 jedes Schwenkträgers 29 an eine Unterdruckquelle angeschlossen sind.

Zum Verschwenken der Schwenkwelle 30 mit ihren Schwenkträgern 29 ist den beiden die jeweilige Etikettenzuführvorrichtung tragenden Wagen 9 und 10 je eine Kulissensteuerung 35 zugeordnet. Jede Kulissensteuerung 35 umfaßt eine an der Innenseite der Traverse 2 des Unterwerkzeugs 1 angebrachte Führungsplatte 36, die von der Traverse 2 hochsteht und eine senkrechte Steuergleitbahn 37 aufweist, die in ihrem überwiegenden Teil einen senkrechten Verlauf besitzt und lediglich in ihrem oberen Endbereich zu der angrenzenden Reihe von Formnestern 5 bzw. 6 in einem Winkel von bei dem dargestellten Beispiel etwa 45° abgewinkelt ist. In die Steuergleitbahn 37 greift mit einem Endbereich ein Betätigungszapfen 38 ein, dessen anderes Ende auf der angrenzenden Stirnfläche eines Antriebsrades 39 eines Schwenkwellenantriebs 40 exzentrisch zur Drehachse 41 des Antriebsrades 39 befestigt ist. Das Antriebsrad 39 ist in der angrenzenden Seitenwand 11 des zugehörigen Wagens 9 bzw. 10 drehbar gelagert und steht über eine Kette 42 oder dgl. Verbindungsorgan in Antriebsverbindung mit einem weiteren Antriebsrad 43, das auf dem angrenzenden, aus der Seitenwand 11 herausgeführten Stirnende der Schwenkwelle 30 festgelegt ist.

Zur Durchführung einer Etikettenübergabe an die Formnester 5 und 6 wird bei den in der Annahmestellung gemäß Fig. 3 befindlichen Schwenkträgern 29 ein Unterdruck an den oberen Annahmeflächen der Schenkel 33 erzeugt, nachdem auf diese in der oben beschriebenen Weise das vordere Ende der jeweiligen Etikettenbahn 14 gefördert worden ist, das auf diese Weise durch Unterdruck am Schenkel 33 des Schwenkträgers 29 festgelegt wird. Sodann erfolgt in der ebenfalls oben erläuterten Weise die Abtrennung des Etiketts 20 von der Etikettenbahn 14 mittels der Schneidvorrichtung 19.

Durch die nun innerhalb des Arbeitsspiels der Tiefziehmaschine erfolgende Abwärtsbewegung des Unterwerkzeugs 1, die über ein Verbindungsglied 44 mittels einer nicht näher dargestellten Hubvorrichtung durchgeführt wird, wird das Antriebsrad 39 des Schwenkwellenantriebs 40 während des unteren Endanteils der Abwärtsbewegung durch Einlaufen des Betätigungszapfens 38 in den oberen Schrägteil der Steuergleitbahn 37 der Kulissensteuerung 35 zur angrenzenden Reihe der Formnester 5 bzw. 6 hin verdreht, und über die entsprechend gewählte Übersetzung des Schwenkwellenantriebs 40 dreht sich die Schwenkwelle 31 entsprechend soweit, daß sie mit ihren Schwenkträgern 29 in die angrenzenden Formnester 5 bzw. 6 des in seiner unteren Ausgangsstellung angekommenen Unterwerkzeugs 1 eingeschwenkt wird, um die auf den Schenkeln 33 gehaltenen Etiketten 20 jeweils an die Innenfläche der angrenzenden Seitenwand 8 der Formnester 5 bzw. 6 zur Anlage zu bringen, derart, daß nur ein geringer Luftspalt zwischen dem Etikett 20 und der angrenzenden Formnest-Seitenwand 8 verbleibt.

In den die Etiketten 20 erhaltenden Seitenwänden 8 der Formnester 5, 6 befinden sich als Mittel zur Etikettenfixierung ebenfalls Saugluftöffnungen, die mit 45 bezeichnet sind und ihrerseits über Kanalverbindungen 46 an eine Unterdruckquelle angeschlossen sind. Die Saugluftöffnungen 45 wie auch die Saugluftöffnungen 34 der Schwenkträger 29 werden dabei mittels einer geeigneten Steuervorrichtung im Arbeitstakt der Tiefziehmaschine in der Weise betätigt, daß sie wahlweise mit ihrer Unterdruckquelle verbunden oder entlüftet werden. So wird bei den an die Innenfläche der Formnest-Seitenwände 8 angelegten Etiketten 20 die Etikettenfixierung unmittelbar nach dem Anlegen durch Verbindung der Saugluftöffnungen 45 mit ihrer Unterdruckquelle übernommen, während gleichzeitig der Unterdruck an den Schenkeln 33 der Schwenkträger 29 aufgehoben wird. Die Fig. 2 zeigt die Schwenkträger 29 in ihrer in die Formnester 5 bzw. 6 eingeklappten Abgabestellung, in der die Etiketten 20 von den Formnest-Seitenwänden 8 übernommen werden.

Nach erfolgter Übernahme der Etiketten 20 durch die Formnest-Seitenwände 8 bewegt sich das Unterwerkzeug 1 im Arbeitstakt der Tiefziehmaschine gegenüber den ortsfest gehaltenen Wagen 9 und 10 der Etikettenzuführung nach oben, wobei durch einen umgekehrten Bewegungsablauf der Kulissensteuerungen 35 der Schwenkwellenantriebe 40 die Schwenkträger 29 durch entsprechend gegenläufiges Verschwenken ihrer Schwenkwellen 30 wieder aus den Formnestern 5, 6 herausschwenken, um erneut ihre Annahmestellung gemäß Fig. 3 einzunehmen. Der Schwenkwinkel der Schwenkträger 29 zwischen ihrer Annahmestellung und ihrer Abgabestellung in einer senkrechten Querebene zum Unterwerkzeug 1 liegt hierbei in einem Bereich zwischen 180° und 270° und beträgt bei dem dargestellten Beispiel etwa 225°.

Nach dem Herausschwenken der Schwenkträger 29 aus den Formnestern 5 und 6 erfolgt durch das nach oben gegen ein schematisch bei 47 dargestelltes Oberwerkzeug steigende Unterwerkzeug 1 der Tiefziehvorgang durch Formung der erwärmten Tiefziehfolie 48, die durch ein Vorstreckstempelsystem und durch Formluft erfolgen kann, wobei die Etiketten 20 gegen die entsprechenden Seitenwände 8 der Formnester 5, 6 gepreßt und auf diese Weise an das geformte Kunststoffbehältnis angesiegelt oder -geklebt werden. Sodann kann auch im Zusammenhang mit der Entformung der Kunststoffbehältnisse der Unterdruck an den Saugluftöffnungen 45 der Formnester 5, 6 aufgehoben werden, und es kann ein neues Arbeitsspiel beginnen, wobei die zeitliche Abfolge der einzelnen Arbeitsschritte so gesteuert sein kann, daß die in ihre Annahmestellung zurückgeklappten Schwenkträger 29 während des Tiefziehvorganges ein neues Etikett 20 von ihrer Etikettenbahn 14 übernehmen und in der beschriebenen Weise positionsgenau fixieren.

## Patentansprüche

1. Vorrichtung zum Zuführen eines Etikettes (20) in ein Formnest (5;6) einer ein auf- und abbewegbares Unterwerkzeug (1) umfassenden Formvorrichtung für Kunststoffbehältnisse, mit einer Fördervorrichtung (13) zum intermittierenden Vorschieben einer aufeinanderfolgende Etiketten (20) umfassenden Etikettenbahn (14) um ein vorbestimmtes Wegstück, einer Schneidvorrichtung (19) zum Abschneiden jeweils eines einzelnen Etiketts (20) vom vorderen Ende der Etikettenbahn (14) und mit einem Transportmittel (27) zum Überführen des vereinzelten Etiketts (20) in eine Stellung im Unterwerkzeug (1), in der es an einer Seitenwand (8) des Formnestes (5;6) anliegt und fixiert ist, wobei als Transportmittel ein Umsetzer (27) vorgesehen ist, der das vordere Ende der Etikettenbahn (14) vor dem Abschneiden des Etiketts (20) erfaßt und dieses nach dem Abschneiden in Anlage an die Seitenwand (8) des Formnestes (5;6) des in seiner unteren Ausgangsstellung befindlichen Unterwerkzeugs (1) bewegt, **dadurch gekennzeichnet,** daß das Unterwerkzeug (1) das Formnest (5;6) einer Formvorrichtung zum Tiefziehen von Kunststoffbehältnissen ausbildet und daß als Umsetzer (27) für das vereinzelte Etikett (20) ein Schwenkträger (29) vorgesehen ist, der aus einer Annahmestellung für das Etikett (20) bei in seiner unteren Ausgangsstellung befindlichem Unterwerkzeug (1) über die obere Formnest-Randkante (28) hinweg um eine zu dieser parallele, horizontale Achse (31) in eine Abgabestellung für die Anlage des Etiketts (20) an die Seitenwand (8) des Formnestes (5;6) klappbar ist.

2. Vorrichtung nach Anspruch 1, dadurch gekennzeichnet, daß der Schwenkträger (29) eine der Schneidebene der Schneidvorrichtung (19) unmittelbar nachgeordnete horizontale obere Annahmefläche für ein Etikett (20) aufweist und diese durch Klappen des Schwenkträgers (29) um einen Winkel (α) von >180° in parallele Gegenüberlage zur Seitenwand (8) des Formnestes (5;6) überführbar ist.

3. Vorrichtung nach Anspruch 2, dadurch gekennzeichnet, daß der Annahmefläche des Schwenkträgers (29) Mittel zur Etikettenfixierung zugeordnet sind.

4. Vorrichtung nach Anspruch 3, dadurch gekennzeichnet, daß die Annahmefläche mit an eine Unterdruckquelle anschließbaren Saugluftöffnungen (34) versehen ist.

5. Vorrichtung nach einem der Ansprüche 1 bis 4, dadurch gekennzeichnet, daß der mit einem Etikett (20) zu versehenden Seitenwand (8) des Formnestes (5;6) Mittel zur Etikettenfixierung zugeordnet sind.

6. Vorrichtung nach Anspruch 5, dadurch gekennzeichnet, daß die Seitenwand (8) mit an eine Unterdruckquelle anschließbaren Saugluftöffnungen (45) versehen ist.

7. Vorrichtung nach Anspruch 4 oder 6, dadurch gekennzeichnet, daß die Saugluftöffnungen (34;45) mittels einer Steuervorrichtung wahlweise mit der Unterdruckquelle verbindbar oder entlüftbar sind.

8. Vorrichtung nach einem der Ansprüche 1 bis 7, dadurch gekennzeichnet, daß zum Klappen des Schwenkträgers (29) eine mit dessen Schwenkwelle (30) gekuppelte Kulissensteuerung (35) vorgesehen ist, in deren Steuergleitbahn (37) ein am Schwenkwellenantrieb (40) vorgesehener Betätigungszapfen (38) eingreift.

9. Vorrichtung nach einem der Ansprüche 1 bis 8, dadurch gekennzeichnet, daß der Schwenkträger (29) L-förmig ausgebildet ist.

10. Vorrichtung nach einem der Ansprüche 1 bis 9, dadurch gekennzeichnet, daß als Schneidvorrichtung (19) ein festes Schneidmesser (21) und ein mittels eines Antriebs diesem gegenüber für einen Schneidvorgang relativ bewegliches Führungsorgan (22) in Gestalt eines Schlitzkörpers mit Einlauftrichter (23) vorgesehen ist.

11. Vorrichtung nach einem der Ansprüche 1 bis 10, dadurch gekennzeichnet, daß zur Zuführung je eines Etiketts (20) in ein Formnest (5;6) einer Reihe von Formnestern (5;6) sämtliche nebeneinander einseitig zum Unterwerkzeug (1) gelegenen Schwenkträger (29) auf einer gemeinsamen Schwenkwelle (30) angeordnet sind.

12. Vorrichtung nach einem der Ansprüche 1 bis 11, dadurch gekennzeichnet, daß dem Umsetzer (27) ein weiterer Umsetzer (27) mit zugehöriger Fördervorrichtung (13) und Schneidvorrichtung (19) gegenüberliegt und beide Umsetzer (27) symmetrisch beidseits einer vertikalen Längsmittelebene (7) des Unterwerkzeugs (1) der Formvorrichtung angeordnet sind.

13. Vorrichtung nach Anspruch 12, dadurch gekennzeichnet, daß das Unterwerkzeug (1) zwei parallele Reihen von Formnestern (5;6) in symmetrischer Anordnung beidseits seiner vertikalen Längsmittelebene (7) aufweist und jedem Formnest (5;6) ein Umsetzer (27) mit zugehöriger Fördervorrichtung (13) und Schneidvorrichtung (19) zugeordnet ist.

14. Vorrichtung nach einem der Ansprüche 1 bis 13, dadurch gekennzeichnet, daß jeder Umsetzer (27) mit zugehöriger Fördervorrichtung (13) und Schneidvorrichtung (19) von einem quer zur Abziehrichtung der Tiefzieh-Kunststoffolie (48) beweglichen, in einer eingestellten Arbeitsposition festsetzbaren Wagen (9,10) getragen ist.

## Claims

1. An apparatus for feeding a label (20) into a mould nest (5, 6) of a device for moulding synthetic plastics containers and comprising a bottom tool (1) adapted for upwards and downwards movement, with a conveyor device (13) for intermittently advancing a web (14) of consecutively disposed labels (20) by a predetermined distance, a cutting device (19) for cutting off in each case an individual label (20) from the leading end of the label web (14) and with a transporting means (27) for moving the isolated label (20) into a position in the bottom tool (1) in which it bears against and is fixed on a side wall (8) of the mould nest (5, 6), the transport means envisaged being a shifting device (27) which grips the leading end of the web (14) of labels prior to the label (20) being cut off and moves this latter, after it has been cut off, into a position against the side wall (8) of the mould nest (5, 6) of the bottom tool (1) which is in its low starting position, characterised in that the bottom tool (1) comprises the mould nest (5, 6) of a moulding device for the deep drawing of synthetic plastics containers and in that as a shifting device (27) for the isolated label (20), a pivotable support (29) is provided which is articulated to move out of a position for accepting the label (20) when the bottom tool (1) is in its low starting position over the upper marginal edge (28) of the mould nest and about a horizontal axis (31) parallel with the said edge and into a delivery position for applying the label (20) against the side wall (8) of the mould nest (5, 6).

2. An apparatus according to Claim 1, characterised in that the pivotable support (29) has directly downstream of the cutting plane of the cutting device (19) a horizontal upper surface for receiving a label (20) and which can be moved, by articulation of the pivotable support (29) through an angle (α) of > 180° into a position parallel with and opposite the side wall (8) of the mould nest (5, 6).

3. An apparatus according to Claim 2, characterised in that means of fixing the label are associated with the receiving surface of the pivotable support (29).

4. An apparatus according to Claim 3, characterised in that the receiving surface is provided with suction air apertures (34) which can be connected to a source of negative pressure.

5. An apparatus according to one of Claims 1 to 4, characterised in that label fixing means are associated with that side wall (8) of the mould nest (5, 6) which is to be provided with a label (20).

6. An apparatus according to Claim 5, characterised in that the side wall (8) is provided with suction air apertures (45) which can be connected to a source of negative pressure.

7. An apparatus according to Claim 4 or 6, characterised in that the suction air apertures (34, 35) can, by means of a control device, be optionally vented or connected to the negative pressure source.

8. An apparatus according to one of Claims 1 to 7, characterised in that for articulation of the pivotable support (29) there is coupled to the pivot spindle (30) a link motion (35) the control slide-way (37) of which is engaged by an actuating stud (38) provided on the pivot spindle drive (40).

9. An apparatus according to one of Claims 1 to 8, characterised in that the pivotable support (29) is of L-shaped construction.

10. An apparatus according to one of Claims 1 to 9, characterised in that as a cutting device (19) a fixed cutter blade (21) is provided and, for a cutting operation, there is a guide member (22) in the form of a slotted body with an inlet funnel (23) which is adapted to be moved by a guide in relation to the said cutter blade.

11. An apparatus according to one of Claims 1 to 10, characterised in that for feeding respective labels (20) into a mould nest (5, 6) in a row of mould nests (5, 6) all adjacently disposed pivotable supports (29) which are disposed beside one another on one side in relation to the bottom tool (1) are mounted on a common pivotable shaft (30).

12. An apparatus according to one of Claims 1 to 11, characterised in that opposite the shifting device (27) is a further shifting device (27) with an associated conveyor means (13) and cutting device (19), both shifting devices (27) being disposed symmetrically on either side of a vertical longitudinal central plane (7) through the bottom tool (1) of the moulding apparatus.

13. An apparatus according to Claim 12, characterised in that the bottom tool (1) has two parallel rows of mould nests (5, 6) in a symmetrical disposition on either side of a vertical longitudinal central plane (7) and in that associated with each mould nest (5, 6) is a shifting device (27) with an associated conveyor means (13) and cutting device (19).

14. An apparatus according to one of Claims 1 to 13, characterised in that each shifting device (27) with its associated conveyor means (13) and cutting device (19) is carried by a carriage (9, 10) adapted for movement crosswise to the draw-off direction of the deep drawn synthetic plastics film (48) and adapted to be locked in a preset working position.

## Revendications

1. Dispositif d'amenée d'une étiquette (20) dans une cavité de formage (5, 6) d'un dispositif de formage de récipients en plastique équipé d'un outil inférieur (1), à mouvement vertical, comprenant un dispositif d'avancement (13) faisant avancer d'une certaine longueur et par intermittence, une bande (14) constitué d'une suite d'étiquettes (20), un dispositif de coupe (19) pour séparer chacune des étiquettes (20) de l'extrémité avant de la bande (14), et un moyen de transport (27) pour transférer chaque étiquette séparée (20) à un point de l'outil inférieur où elle est posée et fixée sur une paroi latérale (8) de la cavité de formage (5, 6), un basculeur (27) constituant le moyen de transport, caractérisé en ce que l'outil inférieur (1) est constitué par la cavité (5, 6) d'un dispositif de formage par emboutissage de récipients en plastique, et le basculeur (27) de l'étiquette individuelle (20) est équipé d'un support basculant (29) qui, à partir d'une position de réception de l'étiquette (20) associée à la position basse de départ de l'outil inférieur (1), peut basculer par dessus le bord supérieur (28) délimitant la cavité de formage, au-tour d'un axe horizontal (31) parallèle à ce bord, pour venir prendre la position de livraison dans laquelle s'effectue le dépôt de l'étiquette (20) sur la paroi latérale (8) de la cavité de formage.

2. Dispositif selon la revendication 1, caractérisé en ce que le support basculant comporte, directement derrière le dispositif de coupe, une portée horizontale de réception par le haut d'une étiquette (20), cette portée pouvant, par rotation du support basculant (29) d'un angle (α) supérieur à 180°, être amenée dans une position parallèle à la paroi latérale (8) de la cavité (5, 6), en superposition par rapport à cette paroi.

3. Dispositif selon la revendication 2, caractérisé en ce que des moyens de fixation de l'étiquette sont associés à la portée de réception du support basculant (29).

4. Dispositif selon la revendication 3, caractérisé en ce que la portée de réception est munie d'orifices d'aspiration raccordables à une source de dépression.

5. Dispositif selon l'une des revendications 1 à 4, caractérisé en ce que des moyens de fixation de l'étiquette sont associés dans la cavité (5, 6) à la paroi latérale (8) recevant l'étiquette (20).

6. Dispositif selon la revendication 5, caractérisé en ce que la paroi latérale (8) est munie d'orifices d'aspiration (45) raccordables à une source de dépression.

7. Dispositif selon la revendication 4 ou 6, caractérisé en ce que les orifices d'aspiration (34, 45) peuvent à volonté, par l'intermédiaire d'un dispositif de commande, être reliés à une source de dépression ou à l'atmosphère.

8. Dispositif selon l'une des revendications 1 à 7, caractérisé en qu'il est prévu, pour faire basculer le support basculant (29), une commande par coulisse accouplée à l'arbre (30) de rotation du support et dans la piste de commande (37) de laquelle est en prise un téton de manoeuvre monté sur l'entraînement (40) de l'arbre basculant.

9. Dispositif selon l'une des revendications 1 à 8, caractérisé en ce que le support basculant (29) a une section en L.

10. Dispositif selon l'une des revendications 1 à 9, caractérisé en ce que le dispositif de coupe (19) est composé d'un couteau fixe (21) et d'un organe de guidage (22) se déplaçant par rapport au couteau (21) sous l'action d'un entraînement pendant l'opération de coupe, cet organe de guidage étant percé d'une fente située au bout d'une entrée en forme d'entonnoir (23).

11. Dispositif selon l'une des revendications 1 à 10, caractérisé en ce que pour amener une étiquette (20) dans chaque cavité (5, 6) d'une série (5, 6), les supports basculants (29) disposés côte à côte d'un même côté de l'outil inférieur (1), sont montés sur un arbre basculant (30) commun.

12. Dispositif selon l'une des revendications 1 à 11, caractérisé en ce qu'en face du basculeur (27) est monté un second basculeur (27) ainsi que les dispositifs d'amenée (13) et de coupe (19) correspondants, les deux basculeurs (27) étant montés symétriquement par rapport au plan médian longitudinal vertical (7) de l'outil inférieur (1).

13. Dispositif selon la revendication 12, caractérisé en ce que l'outil inférieur (1) comporte deux lignes parallèles d'alvéoles de formage (5, 6) symétriques par rapport à son plan médian longitudinal vertical (7), un basculeur (27) avec ses dispositifs d'amenée (13) et de coupe (19) étant associé à chacune des lignes de cavités.

14. Dispositif selon l'une des revendications 1 à 13, caractérisé en ce que chaque basculeur (27) avec ses dispositifs d'amenée (13) et de coupe (19), est porté par un chariot (9, 10) mobile selon une direction transversale à celle selon laquelle s'effectue l'emboutissage de la feuille plastique, le chariot (9, 10) pouvant être fixe dans une position de travail déterminée.
